# EUROPÄISCHE PATENTANMELDUNG

(11) **EP 3 252 555 A1**
(43) Veröffentlichungstag der Anmeldung: **06.12.2017**
(21) Anmeldenummer: 16172187.3
(22) Anmeldetag: 31.05.2016
(51) Int. Cl.: G05B 23/02

(54) **VORRICHTUNG ZUR RECHNERGESTÜTZTEN VISUALISIERUNG VON PROZESSZUSTÄNDEN**

(71) Anmelder: Siemens Aktiengesellschaft, 80333 München (DE)
(72) Erfinder: May, Benjamin, 71272 Renningen (DE); Rudolf, Henning, 90427 Nürnberg (DE); Ziemer, Wolfgang, 86871 Rammingen (DE)

(57) **Zusammenfassung**

Eine Vorrichtung zur rechnergestützten Visualisierung von Prozesszuständen umfasst ein Rechnermodul (10), eine mit dem Rechnermodul (10) verbundene Anzeige- und Bedieneinheit (12) und eine mit dem Rechnermodul (10) verbundene Kommunikationsschnittstelle (8) zu einem Datennetz (2). Über das Datennetz (2) sind Datenquellen in verschiedenen Geräten (4) adressierbar und abfragbar. Die Datenquellen enthalten Daten, die einzeln oder in Kombination einen Prozesszustand charakterisieren. Das Rechnermodul (10) umfasst einen Regeleditor (14) zum Editieren von Regeln. Der Regeleditor (14) ist mit einer Bibliothek (16) von Graphikelementen verbunden. Jedem Graphikelement sind mindestens ein Steuersignal (22) zur Abfrage eines Prozesszustands und mindestens ein Symbol zuordenbar. Das Symbol ist zur Visualisierung des Prozesszustands entsprechend der Regel in Abhängigkeit der abgefragten (26) vorgesehen.

## Beschreibung

Die vorliegende Erfindung betrifft eine Vorrichtung zur rechnergestützten Visualisierung von Prozesszuständen mit einem Rechnermodul, einer mit dem Rechnermodul verbundenen Anzeige- und Bedieneinheit und einer mit dem Rechnermodul verbundenen Kommunikationsschnittstelle zu einem Datennetz, wobei über das Datennetz Datenquellen in verschiedenen Geräten adressierbar und abfragbar sind und wobei die Datenquellen Daten enthalten, die einzeln oder in Kombination einen Prozesszustand charakterisieren.

In der Automatisierungstechnik sind das Überwachen und Steuern technischer Prozesse, englisch als SCADA (Supervisory Control and Data Acquisition) bezeichnet, mittels eines Computer-Systems nicht mehr wegzudenken.

Auf dem Markt sind SCADA-Module erhältlich, wie beispielsweise von der Firma Siemens unter dem Namen "SIMATIC WinCC", die skalierbare Prozessvisualisierungssysteme mit zahlreichen Funktionen zur Überwachung von automatisierten Prozessen umfassen. Sie können als Einplatz- oder verteiltes Mehrplatzsystem mit redundanten Servern ausgebildet sein.

Das SCADA-Modul "SIMATIC WinCC" umfasst Engineering-Werkzeuge, mit denen Anzeigeoberflächen oder HMI-Bilder (HMI = Human-Machine-Interface) entworfen werden können. Die Anzeigeoberflächen zeigen einem Nutzer Daten und Kombinationen von Daten an, die Prozesszustände charakterisieren. Zusätzlich können Informationen von den Prozesszuständen auch graphisch aufbereitet angezeigt werden.

Dabei erfordert die Gestaltung der Bildschirmoberfläche zur graphischen Darstellung von Informationen, die auf Daten und Kombinationen von Daten basieren, Engineering-Werkzeuge und Programmierkenntnisse. Mit dem Engineering-Werkzeug wird die Positionierung der Anzeige wie auch die Form der Darstellung fest definiert, lediglich alphanumerische Zeichen und Zeigerelemente sind dynamisch änderbar durch aktuelle Variableninhalte. Diese so einmal festgelegten Anzeigeoberflächen sind statisch und für eine dauerhafte Anzeige vorgesehen.

Der vorliegenden Erfindung liegt die Aufgabe zugrunde, die eingangs genannte Vorrichtung derart weiterzubilden, dass ein Nutzer ohne Programmiergerät und/oder Programmierkenntnisse Abfragen von Prozesszuständen formulieren oder ändern und durchführen kann.

Die Aufgabe wird durch eine Vorrichtung mit den Merkmalen des Anspruchs 1 gelöst. Danach umfasst das Rechnermodul der eingangs genannten Vorrichtung einen Regeleditor zum Editieren von Regeln. Der Regeleditor ist mit einer Bibliothek von Graphikelementen verbunden, wobei jedem Graphikelement mindestens ein Steuersignal zur Abfrage eines Prozesszustands zuordenbar ist und wobei jedem Graphikelement mindestens ein Symbol zur Visualisierung eines Prozesszustands zuordenbar ist, wobei das Symbol zur Visualisierung des Prozesszustands entsprechend der Regel in Abhängigkeit der abgefragten Daten vorgesehen ist.

Somit kann ein Nutzer ad-hoc ohne Programmiergerät und ohne Programmierkenntnis Regeln zur Abfrage von Prozesszuständen erstellen und eine gewünschte graphische Darstellung dazu erzeugen. Es lässt sich sogar ein gesamter Arbeitsablauf (englisch: workflow) mit einer definierten Abfolge von Abfragen einschließlich der Abfrageergebnisse zur Darstellung eines Prozesszustands erstellen.

Vorteilhafte Ausgestaltungen der erfindungsgemäßen Vorrichtung sind durch die Merkmale der Ansprüche 2 bis 10 gegeben.

Gemäß den Merkmalen des Anspruchs 2 ist der Regeleditor mit einer Bibliothek von Operanden verbunden zur Bearbeitung von abgefragten Daten. Jedem Graphikelement ist als weiterer Teil der Regel ein Operand zuordenbar. Damit können mehrere Prozessdaten miteinander verknüpft werden, um komplexe Prozesszustände darzustellen.

Gemäß den Merkmalen des Anspruchs 3 ist das Steuersignal ausgebildet ist, Datenquellen in Maschinen zu adressieren und abzufragen. Damit können in einer wichtigen Anwendung Maschinenzustände, wie Zustände in Werkzeugmaschinen, abgefragt und visualisiert werden.

Gemäß den Merkmalen des Anspruchs 4 ist das Steuersignal ausgebildet ist, Datenquellen in einer Datenbank mit historischen Daten zu adressieren und abzufragen. Damit kann beispielsweise ein Zeitverlauf eines Prozesszustands rekonstruiert und dargestellt werden.

Gemäß den Merkmalen des Anspruchs 5 enthält die Bibliothek von Operanden logische Verknüpfungen und/oder Berechnungsvorschriften. Damit können bedingte Abfragen und Darstellungen erzeugt und dargestellt und/oder auch Daten aufbereitet dargestellt werden.

Gemäß den Merkmalen des Anspruchs 6 ist mit dem Regeleditor ein Speichermodul verbunden zum Abspeichern von erstellten Regeln zur Abfrage und Visualisierung der Prozesszustände. Damit stehen die zusammengestellten Regeln auch für spätere Abfragen und Darstellungen zur Verfügung.

Gemäß den Merkmalen des Anspruchs 7 umfasst das Rechnermodul ein Aktualisierungsmodul zum automatischen wiederholten Abfragen des Prozesszustands und zur Darstellung des Prozesszustands entsprechend der abgespeicherten Regeln in Abhängigkeit der abgefragten Daten.

Gemäß den Merkmalen des Anspruchs 8 umfasst das Rechnermodul ein Gruppierungsmodul zur Gruppierung der Graphikelemente auf der Anzeige- und Bedieneinheit. Damit können eine oder mehrere Anzeigen in einem oder mehreren Fenstern auf der Anzeigeeinheit übersichtlich gruppiert dargestellt werden.

Die Kommunikationsschnittstelle kann drahtgebunden ausgeführt sein. Gemäß den Merkmalen des Anspruchs umfasst die Kommunikationsschnittstelle ein Verbindungsmodul zu einem lokalen drahtlosen Netzwerk. Damit kann flexibel und ortsungebunden, soweit über es das drahtlose Netzwerk erlaubt, eine Abfrage eines Prozesszustands definiert und auch durchgeführt werden.

Die Anzeige- und Bedieneinheit kann durch einen Monitor mit zusätzlichen Eingabegeräten, wie eine Maus und/oder eine Tastatur, realisiert sein. Gemäß den Merkmalen des Anspruchs 10 ist die Anzeige- und Bedieneinheit als Touchscreen ausgebildet. Damit ist die Anzeige- und Bedieneinheit als bauliche Einheit besonders gut handhabbar. Der Touch-Screen kann zudem auch Teil eines Tablet-PCs sein.

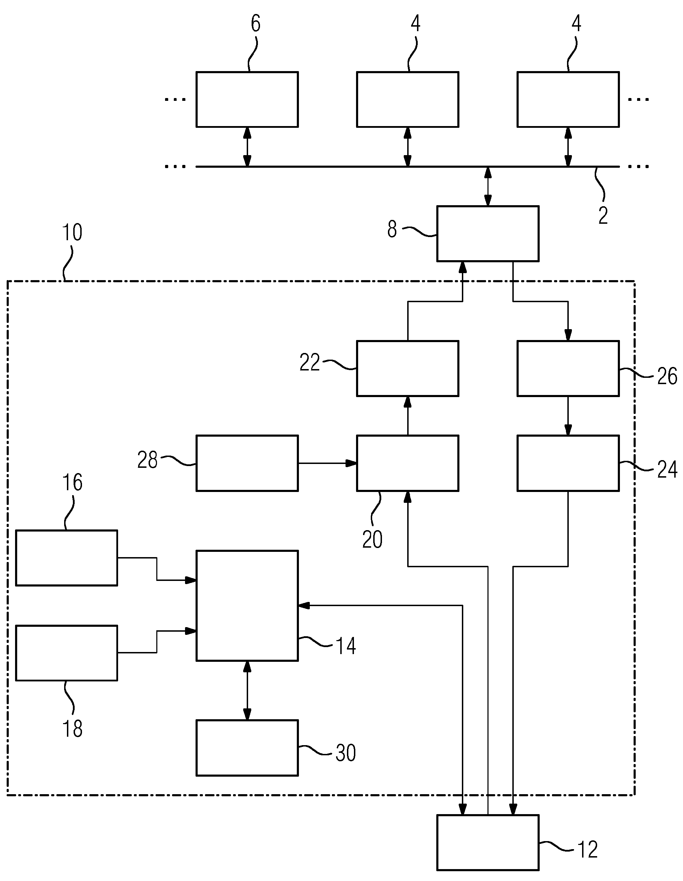

Die vorstehend beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit der Zeichnung näher erläutert wird. Hierbei zeigt in schematischer Darstellung die
Figur in einem Blockbild den funktionellen Aufbau einer Vorrichtung zur rechnergestützten Visualisierung von Prozesszuständen.

Die in der Figur dargestellte Vorrichtung zur rechnergestützten Visualisierung von Prozesszuständen ist über ein Datennetz 2 mit mehreren räumlich verteilt angeordneten Geräten 4 verbunden. Bei den Geräten 4 kann es sich beispielsweise um Produktionsmaschinen oder Werkzeugmaschinen handeln, die in einem Herstellungs- oder Produktionsprozess zusammenwirken. Zusätzlich ist eine Datenbank 6 in das Datennetz 2 eingebunden. Die Datenbank 6 ist als Server ausgeführt und enthält unter anderem Werte von in der Vergangenheit aufgetretenen Prozesszuständen.

Die Kommunikation innerhalb des Datennetzes 2 erfolgt beispielsweise auf der Basis von TCP-basierten (TCT = Transmission Control Protocol) Internettechniken. Das Datennetz 2 kann jedoch auch für eine Kommunikation über serielle Verbindungen in Form von Punkt-zu-Punkt-Kommunikationen und Feldbussystemen realisiert sein.

Die Vorrichtung zur Visualisierung ist über eine Kommunikationsschnittstelle 8 mit dem Datennetz 2 datenmäßig verbunden. Damit ist die Vorrichtung an den Prozess angebunden, dessen Zustände abgefragt und visualisiert werden sollen. Die Kommunikationsschnittstelle 8 ist beispielsweise zur drahtlosen Kommunikation mit dem Datennetz 2 ausgebildet und vorzugsweise als WLAN (= Wireless Local Area Network) realisiert.

Ein Rechnermodul 10 mit weiter unten noch detailliert beschriebenen Softwarekomponenten ist ausgebildet, über das Datennetz 2 Datenquellen in den verschiedenen Geräten 4 sowie in der Datenbank 6 zu adressieren und abzufragen und die abgefragten Daten visuell aufbereitet dem Anzeigeteil einer Anzeige- und Bedieneinheit 12 zuzuführen.

Datenquellen sind beispielsweise Sensoren, die verschiedene Betriebszustände in den Geräten 4, wie beispielsweise Schalterstellungen, Temperatur, Füllungsgrad, Drehzahl, Position eines Werkzeugs, Art eines Werkzeugs, usw. erfassen und für Steuerungs- und Überwachungszwecke zur Verfügung stellen.

Mittels eines graphischen Regeleditors 14 kann ein Nutzer unmittelbar und ad-hoc Regeln für Abfragen zusammenstellen, um Informationen über den Zustand von bestimmten Geräten 4 oder auch von einzelnen Komponenten innerhalb der Geräte 4 abzufragen und graphisch aufbereitet darzustellen. Die Regeln zur Abfrage und Darstellung werden über die Anzeige- und Bedieneinheit 12 editiert. Die Anzeige- und Bedieneinheit 12 ist vorzugsweise als Touch-Screen ausgebildet.

Der graphische Regeleditor 14 hat Zugriff auf eine Bibliothek 16, die verschiedene Graphikelemente enthält. Die Graphikelemente können auch dynamisch veränderbare Symbole umfassen. Beispielsweise kann die Bibliothek 16 Ampel-Elemente mit den farblich änderbaren Anzeigesymbolen "rot", "gelb", "grün", Pegelanzeigen, Balkenanzeigen mit in der Länge änderbaren Balken, runde Zeigeruhranzeigen mit den drei Symbolen "aktueller Zeiger", "Schleppzeiger für Minimum", "Schleppzeiger für Maximum", x/y-Graph-Anzeigen zur Darstellung eines zeitlich veränderlichen Werts oder auch individuell entworfene Graphiken umfassen.

Die Bibliothek 16 enthält vorzugsweise weiterhin Operanden für boolesche Verknüpfungen sowie Operanden zur mathematischen Bearbeitung der abgefragten Werte, beispielsweise Operanden zur Addition, Subtraktion, Multiplikation, Mittelwertbildung, usw. Mithilfe der Rechenfunktionen lässt sich zu jedem Wert und jedem Kombinationsergebnis ein linearer Faktor vergeben, um zusätzliche reale Einheiten in der Anzeige zu haben.

Zusätzlich hat der graphische Regeleditor 14 Zugriff auf ein Gruppierungswerkzeug 18 zum übersichtlichen Anordnen der Graphikelemente auf der Anzeige- und Bedieneinheit 12. Beispielsweise können mit dem Gruppierungswerkzeug 18 auf der Anzeige- und Bedieneinheit 12 ähnlich wie mit dem bekannten Gruppierungswerkzeug "Fences®" für Windows® beliebige Fenster erzeugt und mit einer Überschrift versehen werden, worin dann entsprechend zusammengestellte Graphikelemente angeordnet werden können.

Mit im Regeleditor 14 erstellten Abfrageregeln 20 sind Steuersignale 22 verknüpft. Die Steuersignale 22 adressieren die entsprechenden Datenquellen in den Geräten 4 und/oder in der Datenbank 6 und fragen die dort aktuell vorhandenen Werte ab. Ebenfalls mit dem Regeleditor 14 erstellte Auswerteregeln 24 bereiten die abgefragten und über die Kommunikationsschnittstelle 8 einlaufenden Daten 26 für die Darstellung auf der Anzeige- und Bedieneinheit 12 auf.

Mittels eines Taktgebers 28 kann zur Aktualisierung der abgefragten Werte eine Taktrate, beispielsweise 2 Sekunden, festgelegt werden. Die Aktualisierung findet permanent im Hintergrund entsprechend der Abfrageregel 20 und der Auswerteregel 24 statt.

Es ist auch möglich, die mit dem Regeleditor 14 erstellten Regeln 20 und 24 in einem Speicher 30 abzulegen, damit sie für spätere Abfragen zur Verfügung stehen.

Zur Erstellung einer ad-hoc-Abfrageregel 20 eines Prozesszustandes wählt ein Nutzer zunächst die Adresse der abzufragenden Datenquelle aus. Dies kann beispielsweise durch eine Auswahl von Merkern oder Flags in den speicherprogrammierbaren Steuerungen der entsprechenden Geräte 4 erfolgen. Der Nutzer wählt dann ein Graphikelement für die Anzeige des gewünschten Prozesszustands aus. Zusätzlich legt der Nutzer eine oder auch mehrere Bedingungen für das dem Graphikelement zugeordnete dynamisch änderbare Symbol fest. Das Symbol ändert dann in Abhängigkeit der Erfüllung oder Nichterfüllung der Bedingung seine Darstellung.

An vier Beispielen soll dies erläutert werden. Die Zuordnung und Verknüpfung stellt der Nutzer auf der graphischen Anzeige- und Bedieneinrichtung 12 her.

Im ersten Beispiel soll in dem Gerät 4 mit der speicherprogrammierbaren Steuerung PLC1 der Merker M1.7 abgefragt und das Abfrageergebnis als Ampel mit dem Ampelelement3 dargestellt werden. Die Bedingung für die Anzeige ist dann beispielsweise wie folgt festgelegt: Ist der Wert des Merkers M1.7 = 1, soll das Ampelsymbol "grün" dargestellt werden, ist der Wert des Merkers M1.7 = 0, soll das Ampelsymbol neutral dargestellt werden.

Im zweiten Beispiel sollen zwei Geräte 4 mit der speicherprogrammierbaren Steuerung PLC1 und PLC2 abgefragt und die Abfragewerte miteinander verknüpft werden. abgefragt und die Abfrageergebnisse kombiniert dargestellt werden. Beispielsweise soll das Ampelsymbol rot dargestellt werden, wenn der Merker M1.7 in der PLC1 oder in der PLC2 gleich "eins" oder der Wert DB10.DBX109.6 gleich "eins" ist. Dabei ist der Wert DB10.DBX109.6 von der NC/Antriebsschnittstellenvariablen für den Zustand "Betriebsbereit" der Antriebe jeweils von Maschine PLC1 und 2 vorgegeben.

Im dritten Beispiel soll die Kühlmitteltemperatur, die beispielsweise im Merkerbyte 99 abgelegt ist, mit einem Ampelsymbol veranschaulicht werden. So soll das Ampelsymbol rot dargestellt werden, wenn die Kühlmitteltemperatur größer als 70 °C oder kleiner als 30 °C ist. Ist die Kühlmitteltemperatur im Bereich zwischen 60 °C und 70 °C, soll die Ampel gelb dargestellt werden. Die Ampel soll grün dargestellt werden, wenn keine der angegebenen Bedingungen erfüllt ist.

Im vierten Beispiel soll die Entwicklung der Motortemperatur mit den letzten 30 abgespeicherten Werten als Diagramm dargestellt werden. Hier wird zusätzlich zum Merker mit dem aktuellen Wert die Datenbank 6 adressiert, worin in einem festgelegten Speicherbereich die einzelnen Werte der in der Vergangenheit aufgetretenen Motortemperatur abgespeichert sind.

Die Funktionalität des Software-Werkzeugs im Regeleditor 14 zur Formulierung von Kombinationen und Bedingungen zur Aufbereitung der abgefragten Daten 26 ist ähnlich zu derjenigen, die im Formeleditor in Microsoft Excel® vorhanden ist. Dabei können auch aus mehreren Werten gebildete Ergebnisse als Hilfsergebnisse festgelegt werden, um diese dann in weiteren Graphikelementen weiter zu verknüpfen.

Die vorstehend beschriebenen Funktionalitäten lassen sich für die Anwendung besonders vorteilhaft in einen Tablet-PC integrieren. Die Verbindung mit dem Datennetz 2 erfolgt in diesem Fall über eine drahtlose Funkverbindung. Die Anzeige- und Bedieneinheit 12 ist dabei als Touch-Screen ausgebildet, der sich besonders zur Eingabe und Manipulation von graphischen Elementen und damit zum graphischen Editieren von Regeln eignet.

## Patentansprüche

1. Vorrichtung zur rechnergestützten Visualisierung von Prozesszuständen mit einem Rechnermodul (10), einer mit dem Rechnermodul (10) verbundenen Anzeige- und Bedieneinheit (12) und einer mit dem Rechnermodul (10) verbundenen Kommunikationsschnittstelle (8) zu einem Datennetz (2), wobei über das Datennetz (2) Datenquellen in verschiedenen Geräten (4) adressierbar und abfragbar sind, und wobei die Datenquellen Daten enthalten, die einzeln oder in Kombination einen Prozesszustand charakterisieren, **dadurch gekennzeichnet, dass** das Rechnermodul (10) einen Regeleditor (14) zum Editieren von Regeln umfasst, dass der Regeleditor (14) mit einer Bibliothek (16) von Graphikelementen verbunden ist, wobei jedem Graphikelement mindestens ein Steuersignal (22) zur Abfrage eines Prozesszustands zuordenbar ist und wobei jedem Graphikelement mindestens ein Symbol zuordenbar ist, wobei das Symbol zur Visualisierung des Prozesszustands entsprechend der Regel in Abhängigkeit der abgefragten Daten (26) vorgesehen ist.

2. Vorrichtung nach Anspruch 1,
**dadurch gekennzeichnet, dass** der Regeleditor (14) mit einer Bibliothek (16) von Operanden verbunden ist zur Bearbeitung von abgefragten Daten (26) und dass jedem Graphikelement als weiterer Teil der Regel ein Operand zuordenbar ist

3. Vorrichtung nach Anspruch 1 oder 2,
**dadurch gekennzeichnet, dass** das Steuersignal (22) ausgebildet ist, Datenquellen in Maschinen zu adressieren und abzufragen.

4. Vorrichtung nach einem der vorstehenden Ansprüche,
**dadurch gekennzeichnet, dass** das Steuersignal (22) ausgebildet ist, Datenquellen in einer Datenbank (6) mit historischen Daten zu adressieren und abzufragen.

5. Vorrichtung nach Anspruch 2 bis 4,
**dadurch gekennzeichnet, dass** die Bibliothek (16) von Operanden logische Verknüpfungen und/oder Berechnungsvorschriften enthält.

6. Vorrichtung nach einem der vorstehenden Ansprüche,
**dadurch gekennzeichnet, dass** mit dem Regeleditor (14) ein Speichermodul (30) verbunden ist zum Abspeichern von erstellten Regeln zur Abfrage und Visualisierung der Prozesszustände.

7. Vorrichtung nach einem der vorstehenden Ansprüche,
**dadurch gekennzeichnet, dass** und dass das Rechnermodul (10) ein Aktualisierungsmodul umfasst zum wiederholten Abfragen des Prozesszustands und zum Aktualisieren des Symbols.

8. Vorrichtung nach einem der vorstehenden Ansprüche,
**dadurch gekennzeichnet, dass** das Rechnermodul (10) ein Gruppierungsmodul (18) zur Gruppierung der Graphikelemente auf der Anzeige- und Bedieneinheit (12) umfasst.

9. Vorrichtung nach einem der vorstehenden Ansprüche,
**dadurch gekennzeichnet, dass** die Kommunikationsschnittstelle (8) ein Verbindungsmodul zu einem lokalen drahtlosen Netzwerk umfasst.

10. Vorrichtung nach einem der vorstehenden Ansprüche,
**dadurch gekennzeichnet, dass** die Anzeige- und Bedieneinheit (12) als Touchscreen ausgebildet ist.
